# EUROPÄISCHE PATENTSCHRIFT

(11) **EP 2 163 961 B1**
(45) Veröffentlichungstag und Bekanntmachung des Hinweises auf die Patenterteilung: **01.02.2012**
(21) Anmeldenummer: 08016078.1
(22) Anmeldetag: 12.09.2008
(51) Int. Cl.: G05B 19/418

(54) **Verfahren zur Einräumung einer Zugriffsberechtigung auf ein rechnerbasiertes Objekt in einem Automatisierungssystem, Computerprogramm und Automatisierungssystem**
Method for assigning access authorisation to a computer-based object in an automation system, computer program and automation system
Procédé de concession d'une justification d'accès sur un objet informatique dans un système d'automatisation, programme informatique et système d'automatisation

(43) Veröffentlichungstag der Anmeldung: 17.03.2010
(73) Patentinhaber: Siemens Aktiengesellschaft, 80333 München (DE)
(72) Erfinder: Herberth, Harald, 90522 Oberasbach (DE); Kröger, Ulrich, 67657 Kaiserslautern (DE); Sobihard, Allan, 84104 Bratislava (SK)

(56) Entgegenhaltungen:
- EP-A- 1 582 950
- WO-A-2005/009003
- TIM MOSES: "OASIS EXTENSIBLE ACCESS CONTROL MARKUP LANGUAGE (XACML) VERSION 3.0 POLICY DISTRIBUTION PROTOCOL USE-CASES AND REQUIREMENTS, WORKING DRAFT 01" OASIS, 8. Oktober 2004 (2004-10-08), Seiten 1-9, XP002509409
- PETERS ET AL: "A Holistic Approach to Security Policies - Policy Distribution with XACML over COPS" ELECTRONIC NOTES IN THEORETICAL COMPUTER SCIENCE, ELSEVIER, Bd. 168, 16. Februar 2007 (2007-02-16), Seiten 143-157, XP005871233 ISSN: 1571-0661

## Beschreibung

Aufgrund einer ständig steigenden Bedeutung von Informationstechnik für Automatisierungssysteme gewinnen Verfahren zur Sicherung von vernetzten Systemkomponenten wie Überwachungs-, Steuerungs- und Regelungseinrichtungen, Sensoren und Aktoren gegenüber unberechtigtem Zugriff verstärkt an Bedeutung. Im Vergleich zu anderen Anwendungsgebieten der Informationstechnik kommt Datenintegrität in der Automatisierungstechnik eine besonders hohe Bedeutung zu. Insbesondere bei einer Erfassung, Auswertung und Übermittlung von Meß- und Steuerungsdaten ist sicherzustellen, daß vollständige und unveränderte Daten vorliegen. Absichtliche, unabsichtliche oder durch einen technischen Fehler bedingte Veränderungen sind zu vermeiden. Besondere Anforderungen in der Automatisierungstechnik für sicherheitstechnische Verfahren resultieren außerdem aus einem Meldungsverkehr mit verhältnismäßig vielen, aber relativ kurzen Nachrichten. Daneben ist einer Echtzeitfähigkeit eines Automatisierungssystems und seiner Systemkomponenten Rechnung zu tragen.

Zur Definition von Sicherheitsrichtlinien und Zugriffsberechtigungen werden bisher vielfach Auszeichnungssprachen zur Darstellung hierarchisch strukturierter Daten in Form von Textdateien verwendet, die relativ einfach zwischen unterschiedlichen informationstechnischen Systemen ausgetauscht werden können, insbesondere über weitausgedehnte Netzwerke. Eine solche Auszeichnungssprache ist XACML (eXtensible Access Control Markup Language), die durch das OASIS-Konsortium für eine Darstellung und Verarbeitung von Autorisierungsrichtlinien standardisiert ist. Insbesondere dient XACML dazu, auswertbare Regeln zu erstellen, die einen Zugriff von Subjekten auf Ressourcen eines Systems steuern.

In großen, verteilten Automatisierungssystemen können mittels XACML definierte Sicherheits- und Zugriffsrichtlinien sehr umfangreich werden. Problematisch dabei ist vor allem eine systemweite Verteilung derartiger Richtlinien an sämtliche zu berücksichtigenden Netzknoten innerhalb eines Automatisierungssystems. Bisher ist dieses Problem dadurch gelöst worden, daß pro Netzknoten eigene Sicherheits- und Zugriffsrichtlinien spezifiziert werden, was allerdings einen erhöhten Konfigurationsaufwand erfordert. Alternativ hierzu können systemweite Sicherheits- und Zugriffsrichtlinien verallgemeinert oder vereinfacht werden. Nachteilig hierbei ist, daß Genauigkeitsanforderungen mitunter nur unbefriedigend erfüllt werden und nur eine grobe Verwaltung von Zugriffsrechten ermöglicht wird. In Anwendungsgebieten, in denen es auf eine feingliedrige Verwaltung von Zugriffsrechten ankommt, scheiden derartige Ansätze daher aus.

Aus WO 2005/009003 ist ein Verfahren zur Zugriffsrechteeinräumung auf computerbasierte Objekte bekannt, bei dem Zugriffsrechte originär in XACML-Dateien beschrieben werden. Eine hierarchische Auflösung eines Objektmodells sowie eine gezielte Isolation und Extraktion relevanter Teilbäume sind dort nicht vorgesehen. Dies hat den Nachteil, daß eine ausschnittsweise und konsistente Bereitstellung von XACML-Dateien insbesondere in bezug auf Zugriffsrechtaktualisierungen oder einen Ausfall von zugeordneten Policy Decision Points äußerst problematisch ist. Hierzu erfolgt eine Bereitstellung von Benutzer-Authentifizierungsdaten an eine Vielzahl unterschiedlicher Policy Decision Points mittels eines Directory Service.

In Tim Moses "OASIS Extensible Access Control Markup Language (XACML) Version 3.0 Policy Distribution Protocol Use-cases and Requirements, Working Draft 01" OASIS, 08.10.2004, Seiten 1-9 ist eine Bereitstellung von Policies an Policy Decision Points durch eine Vielzahl von Policy Repositories und Policy Retrieval Points beschrieben. Die Policy Decision Points fragen im Sinn eines Pull-Verfahrens selbständig für sie relevante Policies über mehrere Policy Retrieval Points aus einer Vielzahl von Policy Repositories ab.

Der vorliegenden Erfindung liegt daher die Aufgabe zugrunde, ein effizientes, konfigurationsfreundliches Verfahren zur Einräumung einer Zugriffsberechtigung auf ein rechnerbasiertes Objekt in einem Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen und durch ein Computerprogramm mit den in Anspruch 12 angegebenen Merkmalen gelöst. Vorteilhafte Weiterbildungen der vorliegenden Erfindung sind in den abhängigen Ansprüchen angegeben.

Erfindungsgemäß wird eine Zugriffsberechtigung für ein rechnerbasiertes Objekt in einem mehrere Netzknoten umfassenden Automatisierungssystem anhand einer Steuerungsdatei eingeräumt, die entsprechend einem Schema für eine Auszeichnungssprache zur Zugriffsberechtigungseinräumung strukturiert ist und eine hierarchische Baumstruktur abbildet. Dabei sind Zugriffsberechtigungen in einem Objektmodell abgebildet, das eine hierarchische Baumstruktur aufweist. Für einen ausgewählten Netzknoten, an dem Dienste anhand rechnerbasierter Objekte bereitgestellt werden, oder bei einer Anforderung eines Zugriffs auf ein rechnerbasiertes Objekt wird ein relevanter Teilbaum des Objektmodells durch einen Zugriffsrichtliniendienst ermittelt. Aus dem ermittelten relevanten Teilbaum wird die Steuerungsdatei erzeugt, die für den ausgewählten Netzknoten oder für einen Zugriff auf das rechnerbasierte Objekt verfügbar gemacht wird. Auf diese Weise kann von einer systemweiten Verteilung von großen Datenmengen mit Sicherheits- und Zugriffsrichtlinien abgesehen werden.

Darüber hinaus wird die Steuerungsdatei erfindungsgemäß durch den Zugriffsrichtliniendienst aus dem ermittelten relevanten Teilbaum erzeugt und für den ausgewählten Netzknoten oder für einen Zugriff auf das rechnerbasierte Objekt verfügbar gemacht. Außerdem wird durch den Zugriffsrichtliniendienst für sämtliche Netzknoten, an denen Dienste bereitgestellt bzw. genutzt werden, jeweils ein relevanter Teilbaum des Objektmodells ermittelt und eine netzknotenspezifische Steuerungsdatei verfügbar gemacht.

Rechnerbasierte Objekte sind beispielsweise ohne Beschränkung der Allgemeinheit dieses Begriffs Betriebssysteme, Steue-rungs- oder Anwendungsprogramme, durch Betriebssysteme, Steuerungs- oder Anwendungsprogramme bereitgestellte Dienste, Dienstkomponenten, Leistungsmerkmale, Funktionen oder Prozeduren, Zugriffsrechte auf Systemressourcen oder Peripheriegeräte sowie auf einem Speichermedium befindliche Daten. Funktionen oder Prozeduren umfassen dabei insbesondere auch eine Freigabe von Zugriffsberechtigungen in einem Automatisierungssystem. Ein rechnerbasiertes Objekt kann außerdem einem Rechenprozeß zugeordnet sein, der sämtliche Einheiten eines in einen Arbeitsspeicher geladenen ausführbaren Programms umfaßt. Unter einem Rechner sind beispielsweise PCs, Notebooks, Server, PDAs, Mobiltelefone sowie Steuerungs- und Regelungsmodule, Sensoren oder Aktoren in der Automatisierungs-, Fahrzeug-, Kommunikations- oder Medizintechnik zu verstehen - allgemein Einrichtungen, in denen Computerprogramme ablaufen. Die Steuerungsdatei kann darüber hinaus auch eine DLL-Datei (Dynamic Link Library) bzw, ein Programmcode umfassendes Shared Objekt sein, das statisch oder dynamischer mit dem Steuerungsprogramm gebunden wird.

Eine Zugriffsberechtigung für ein rechnerbasiertes Objekt wird vorzugsweise durch ein dem rechnerbasierten Objekt zugeordnetes Steuerungsprogramm anhand einer Steuerungsdatei eingeräumt. Anhand des Steuerungsprogramms kann außerdem ein Dienst des Automatisierungssystems innerhalb einer dienstorientierten Architektur bereitgestellt werden. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hierdurch lassen sich wiederum Zugriffsberechtigungsregelungen vereinfachen.

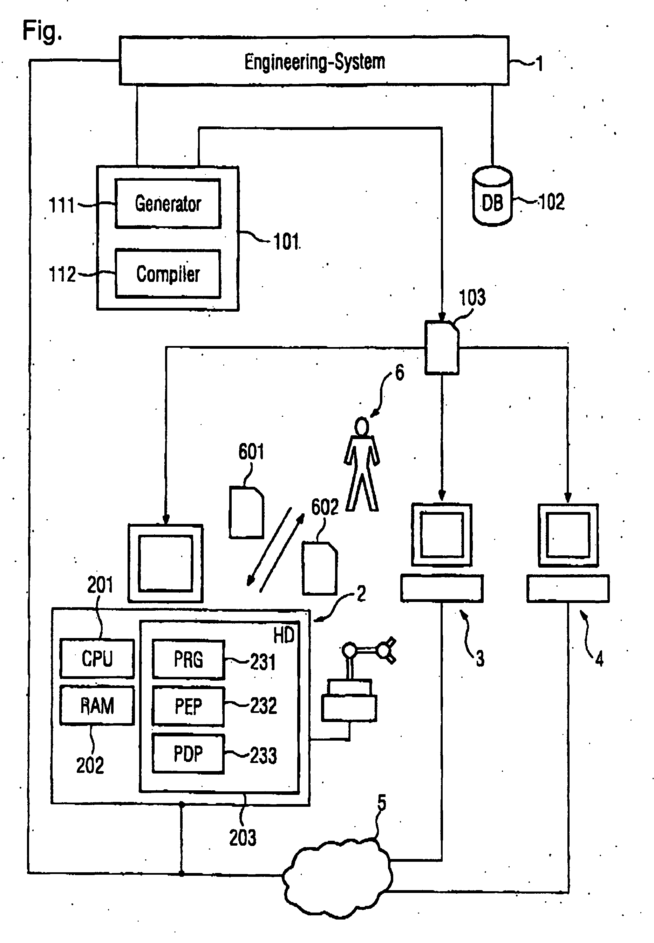

Die Erfindung wird nachfolgend an einem Ausführungsbeispiel anhand der Zeichnung näher erläutert. Es zeigt die
- Figur: eine schematische Darstellung eines Automatisie- rungssystems zur Realisierung eines Verfahrens zur Einräumung einer Zugriffsberechtigung auf ein rech- nerbasiertes Objekt.

Das in der Figur dargestellte Automatisierungssystem umfaßt ein Engineering-System 1, eine mit dem Engineering-System 1 verbundene Servereinheit 101 zur Bereitstellung eines Zugriffsrichtliniendienstes sowie mehrere als Netzknoten über ein Kommunikationsnetz 5 miteinander und dem Engineering-System 1 verbundene Rechnereinheiten 2-4. Das Engineering-System 1 dient zur Konfiguration, Wartung, Inbetriebnahme und Dokumentation des Automatisierungssystems, insbesondere zur Konfiguration des Zugriffsrichtliniendienstes.

Zugriffsberechtigungen innerhalb des Automatisierungssystems sind in einem Objektmodell abgebildet, das eine hierarchische Baumstruktur aufweist und in einer relationalen Datenbank 102 des Engineering-Systems 1 gespeichert ist. Durch eine Rechnereinheit 2 wird eine Zugriffsberechtigung für ein rechnerbasiertes Objekt durch ein dem rechnerbasierten Objekt zugeordnetes auf der Rechnereinheit 2 ablaufendes Steuerungsprogramm 231 anhand einer Steuerungsdatei 103 eingeräumt. Die Steuerungsdatei 103 ist entsprechend einem Schema für eine Auszeichnungssprache zur Zugriffsrechteinräumung strukturiert und bildet eine hierarchische Baumstruktur ab. In Abhängigkeit von einer Anforderung eines Zugriffs auf ein rechnerbasiertes Objekt oder a priori für einen ausgewählten Netzknoten, an dem Dienste anhand rechnerbasierter Objekte bereitgestellt werden, wird durch den Zugriffsrichtliniendienst ein relevanter Teilbaum des Objektmodells ermittelt, aus dem die Steuerungsdatei 103 erzeugt wird. Die erzeugte Steuerungsdatei 103 wird dann durch den Zugriffsrichtliniendienst für einen Zugriff auf das rechnerbasierte Objekt oder a priori für den ausgewählten Netzknoten verfügbar gemacht.

Zur beschleunigten Bereitstellung von Steuerungsdateien ist zumindest ein Teil des Objektmodells in einen Arbeitsspeicher der Servereinheit 101 geladen. Außerdem wird das Objektmodell durch das Engineering-System 1 für ein beschleunigtes Erzeugen von Steuerungsdateien indiziert. Entsprechend einer bevorzugten Ausführungsform wird durch den Zugriffsrichtliniendienst für im wesentlichen sämtliche Netzknoten, an denen Dienste bereitgestellt bzw. genutzt werden, jeweils ein relevanter Teilbaum des Objektmodells ermittelt und a priori eine netzknotenspezifische Steuerungsdatei verfügbar gemacht.

Anhand des Steuerungsprogramms 231 wird ein Dienst des Automatisierungssystems innerhalb einer dienstorientierten Architektur bereitgestellt. Das Steuerungsprogramm 231 ist auf einer Festplatte 203 als nichtflüchtiger Speichereinheit der Rechnereinheit 2 gespeichert, und sein Programmcode ist in einen Arbeitsspeicher 202 der Rechnereinheit 2 ladbar und durch eine Prozessoreinheit 201 ausführbar.

Das Steuerungsprogramm 231 dient im vorliegenden Ausführungsbeispiel zur Ansteuerung von meßtechnischer Peripherie der Rechnereinheit 2. Das Steuerungsprogramm 231 ist jedoch nur durch einen hierzu berechtigten Benutzer ausführbar, bzw. ein infolge eines Ablaufs des Steuerungsprogramms 231 erfaßtes Meßergebnis ist nur durch einen berechtigten Benutzer abfragbar. Des weiteren ist das rechnerbasierte Objekt ein Meßergebnis 602, das durch die Rechnereinheit 2 als computergestützter Sensoreinheit erfaßt wird und von einem Benutzer 6 des Automatisierungssystems mittels einer Abfrage 601 angefordert wird. Der Benutzer 6 kann auch ein anderes Gerät innerhalb des Automatisierungssystems sein.

Neben dem Steuerungsprogramm 231 sind auf der Festplatte 203 zur Berechtigungsüberprüfung und Zugriffseinräumung Kontrollprogramme 232, 233 gespeichert, deren Programmcode bei Ablauf in der Rechnereinheit 2 einen Policy Enforcement Point und einen Policy Decision Point implementiert. Der Policy Decision Point dient als Entscheidungsinstanz einer Überprüfung, ob eine Ressourcenanforderung eines Benutzers entsprechend einer durch das in der Datenbank 102 als Policy Store gespeicherte Objektmodell beschriebene Zugriffskontrollrichtlinie berechtigt ist. Entsprechend einem durch den Policy Decision Point ermittelten Überprüfungsergebnis erfolgt durch den Policy Enforcement Point als Freigabeinstanz eine Freigabe oder Sperrung der angeforderten Ressource gegenüber dem jeweiligen Benutzer.

Die mit dem Engineering-System 1 verbundene Servereinheit 101 erzeugt bei einer Änderung des in der Datenbank 102 als Policy Store gespeicherten Objektmodells erneut die Steuerungsdatei 103. Dabei übernimmt ein Generator 111 der Servereinheit 101 primäre Umsetzungsaufgaben für das Objektmodell, während ein Compiler 112 der Servereinheit 101 laufzeitabhängige Parameter für das Steuerungsprogramm 231 berücksichtigt und für die Steuerungsdatei 103 vorgibt. Die Steuerungsdatei 103 wird dann durch die Servereinheit 101 an die jeweilige Rechnereinheit 2-4 verteilt.

Das Schema für ein Erzeugen der Steuerungsdatei 103 ist durch XACML (eXtensible Access Control Markup Language) beschrieben. Auf diese Weise bildet die Steuerungsdatei 103 eine hierarchische Baumstruktur ab, die Regeln umfassende Policies und Policies umfassende Policy Sets als in hierarchisch aufsteigender Bedeutung Regelungselemente aufweist. Eine Policy umfaßt dabei ein Kontrollelement (Target), in dem für eine Überprüfung einer Anwendbarkeit der Policy ein ressourcenanfordernder Benutzer (Subject), eine angeforderte Ressource (Resource) und eine Benutzungshandlung (Action) festgelegt sind. Bei Anwendbarkeit einer Policy wird anhand eines von einer Regel (Rule) der Policy umfaßten Bedingungselements (Condition) überprüft, ob eine in der Regel angegebene Entscheidung über eine Einräumung einer Zugriffsberechtigung festgelegt ist. Eine Auflösung mehrerer gleichzeitig anwendbarer Policies erfolgt mittels Combining-Algorithmen, so daß auf jeden Fall eine abschließende Entscheidung über eine Freigabe oder eine Sperrung einer Ressource getroffen wird. Vorzugsweise werden Combining-Algorithmen für jede Hierarchieebene angewendet.

Vorteilhafterweise umfassen auch Regeln und Policy Sets Kontrollelemente zur Überprüfung ihrer Anwendbarkeit. Jedoch weisen nur Regeln Bedingungselemente auf. Bei einem Erzeugen der Steuerungsdatei 103 aus dem in der Datenbank 102 gespeicherten Objektmodell werden außerdem vorzugsweise allen Elementen des Objektmodells jeweils korrespondierende Bedingungselemente, Regeln, Policies und/oder Policy Sets für die Steuerungsdatei zugeordnet.

Das vorangehend beschriebene Verfahren wird vorzugsweise durch ein in einen Arbeitsspeicher der Servereinheit 101 ladbares Computerprogramm implementiert. Das Computerprogramm weist zumindest einen Codeabschnitt auf, bei dessen Ausführung eine Zugriffsberechtigung für ein rechnerbasiertes Objekt anhand einer Steuerungsdatei einräumbar ist. Die Steuerungsdatei ist entsprechend einem Schema für eine Auszeichnungssprache zur Zugriffsberechtigungseinräumung strukturiert und bildet eine hierarchische Baumstruktur ab, wobei Zugriffsberechtigungen-in einem Objektmodell abbildbar sind, das eine hierarchische Baumstruktur aufweist. Außerdem wird für einen ausgewählten Netzknoten, an dem Dienste anhand rechnerbasierter Objekte bereitgestellt werden, oder bei einer Anforderung eines Zugriffs auf ein rechnerbasiertes Objekt ein relevanter Teilbaum des Objektmodells ermittelt. Die Steuerungsdatei wird aus dem ermittelten relevanten Teilbaum erzeugt und für den ausgewählten Netzknoten oder für einen Zugriff auf das rechnerbasierte Objekt verfügbar gemacht, wenn das Computerprogramm auf der Servereinheit 101 abläuft.

Das oben beschriebene Verfahren läßt sich in bezug auf seine Leistungsfähigkeit durch Anpassung der durch die Steuerungsdatei abgebildeten Baumstruktur optimieren. Hierzu werden Baumstrukturen traversiert und auf Basis dessen Teilbäume mit für eine lokale Behandlung von Zugriffsanfragen tatsächlich relevante Daten extrahiert. Verzugsweise erfolgt eine Bereitstellung von Daten und Indizes für ein derartiges Trimming nach einer Policy-Konfiguration, um negative Auswirkungen auf Laufzeitebene zu vermeiden.

Entsprechend einem ersten möglichen Trimming-Ansatz wird beim Traversieren eines Policy-Baums lediglich auf Gleichheit von Zeichenketten (Strings) überprüft. Ein Equal-Operator ist mit verhältnismäßig geringem Aufwand zu berechnen. Zudem ergeben deutlich aufwendiger zu berechnende Operatoren nur selten Übereinstimmungen.

Alternativ dazu kann ein Policy-Baum rekursiv traversiert werden. Sobald beim Traversieren eine Regel (Rule) ermittelt wird, ist ein relevanter Pfad durch den Policy-Baum ermittelt, und es werden sämtliche Einschränkungen aus Attribut-Übereinstimmungen in einer indizierten Struktur gespeichert. Ein Trimming erfolgt dann auf einer Ermittlung sämtlicher relevanter Pfade, die zu einem vorgegebenen Such-Index passen. Eine endgültige Menge von Pfaden ergibt sich aus einer Schnittmenge aller passenden Pfade über sämtliche Such-Indizes. Durch Bildung einer Vereinigungsmenge wird hieraus eine Menge relevanter Knoten eines Policy-Baums ermittelt.

Ein weiterer Ansatz für ein Trimming eines Policy-Baums besteht darin, für jeden einzelnen Knoten eines Policy-Baums aktualisierte Indizes zu berechnen, die sich auf eine Übereinstimmung jeweilige Knotenattribute beziehen. Um ein mehrfaches Einfügen desselben Knotens zu vermeiden, wird jeder traversierter Knoten entsprechend markiert. Unter Verwendung einer Struktur ermittelter Indizes, können auf einfache Weise zu den Knotenattributen passende Knoten ermittelt werden. Durch Bildung einer Schnittmenge der ermittelten passenden Knoten ergibt sich eine Ergebnismenge relevanter Knoten. Abschließend wird überprüft, ob die Knoten der Ergebnismenge mit der Wurzel des Policy-Baums und einer Regel (Rule) verbunden sind. Dies geschieht durch eine Schnell-Traversierung des Policy-Baums, wodurch eine Zugehörigkeit eines Knotens zur Ergebnismenge verifiziert wird. Vorzugsweise werden bei der Schnell-Traversierung erfaßte Knoten als erfaßt markiert, um eine Mehrfach-Behandlung des jeweiligen Knotens zu vermeiden.

## Patentansprüche

1. Verfahren zur Einräumung einer Zugriffsberechtigung für ein rechnerbasiertes Objekt in einem mehrere Netzknoten umfassenden Automatisierungssystem, bei dem
- Zugriffsberechtigungen in einem Objektmodell abgebildet sind, das eine hierarchische Baumstruktur aufweist,
- eine Zugriffsberechtigung für ein rechnerbasiertes Objekt anhand einer Steuerungedatei eingeräumt wird, die entsprechend einem Schema, für eine Auszeichnungesprache zur Zugriffsberechtigungseinräumung strukturiert ist und eine hierarchische Baumstruktur abbildet,
- für einen ausgewählten Netzknoten, an dem Dienste anhand rechnerbasierter Objekte bereitgestellt werden, oder bei einer Anforderung eines Zugriffs auf ein rechnerbasiertes Objekt ein relevanter Teilbaum des Objektmodells durch einen Zugriffsrichtliniendienst ermittelt wird,
- die Steuerungsdatei durch den Zugriffsrichtliniendienst aus dem ermittelten relevanten Teilbaum erzeugt wird,
- die erzeugte Steuerungsdatei durch den Zugriffsrichtliniendienst für den ausgewählten Netzknoten oder für einen Zugriff auf das rechnerbasierte Objekt verfügbar gemacht wird,
- durch den zugriffsrichtliniendienst für sämtliche Netzknoten, an denen Dienste bereitgestellt und/oder genutzt werden, jeweils ein relevanter Teilbaum des Objektmodells ermittelt und eine netzknotenapezifische Steuerungsdatei verfügbar gemacht wird.

2. Verfahren nach Anspruch 1,
bei dem eine Zugriffsberechtigung für ein rechnerbasiertes Objekt durch ein dem rechnerbasierten Objekt zugeordnetes Steuerungsprogramm anhand einer Steuerungsdatei eingeräumt wird.

3. Verfahren nach Anspruch 2,
bei dem anhand des Steuerungsprogramms ein Dienst des Automatisierungssystems innerhalb einer dienstorientierten Architektur bereitgestellt wird.

4. Verfahren nach einem der Ansprüche 1 bis 3,
bei dem das Objektmodell in einem relationalen Datenbanksystem gespeichert wird und/oder als Objektbaum in einen Arbeitsspeicher einer Rechnereinheit geladen wird.

5. Verfahren nach einem der Ansprüche 1 bis 4,
bei dem der Zugriffsrichtliniendienst durch ein Engineering-System zur Konfiguration, Wartung, Inbetriebnahme und/oder Dokumentation des Automatisierungssystems konfiguriert wird.

6. Verfahren nach Anspruch 5,
bei dem das Objektmodell durch das Engineering-System für ein beschleunigtes Erzeugen von Steuerungsdateien induziert wird.

7. Verfahren nach einem der Ansprüche 1 bis 6,
bei dem das Schema für ein Erzeugen der Steuerungsdatei durch eine als XACML bekannte erweiterbar Zugriffskontroll-Auszeichnungssprache beschrieben ist.

8. Verfahren nach Anspruch 7,
bei dem die Steuerungsdatei eine hierarchische Baumstruktur abbildet, die Regeln umfassende Policies und Policies umfassende Policy Sets als in hierarchisch aufsteigender Bedeutung Regelungselemente aufweis, und bei dem eine Policy ein Kontrollelement umfaßt, in dem für eine Überprüfung einer Anwendbarkeit der Policy ein ressourcenanfordernder Benutzer, eine angeforderte Ressource und eine Benutzungshandlung festgelegt sind, und bei dem bei Anwendbarkeit einer Policy anhand eines von einher Regel der Policy umfaßten Bedingungselements überprüft wird, ob eine in der Regel angegebene Entscheidung über eine Einräumung einer Zugriffsberechtigung festgelegt wird.

9. Verfahren nach Anspruch 8,
bei dem bei einem Erzeugen der Stauerungsdatei aus dem in der Datenbank gespeicherten Objektmodell allen Elementen des Objektmodells jeweils korrespondierende Bedingungselemente, Regeln, Policies und/oder Policy Sets für die Steuerungsdatei zugeordnet werden.

10. Verfahren nach einem der Ansprüche 8 oder 9,
bei dem auch Regeln und Policy Sets Kontrollelemente zur Überprüfung ihrer Anwendbarkeit aufweisen.

11. Verfahren nach einem der Ansprüche 8 bis 10,
bei dem nur Regeln Bedingungselemente aufweisen.

12. Computerprogramm zur Einräumung einer Zugriffsberechtigung, das in einen Arbeitsspeicher eines Rechners ladbar ist und zumindest einen Codeabschnitt aufweist, bei dessen Ausführung
- eine Zugriffsberechtigung für ein rechnerbasiertes Objekt anhand einer Steuerungsdatei einräumbar ist, die entsprechend einem Schema für eine Auszeichnungsaprache zur Zugriffsberechtigungaeinräumung strukturiert ist und eine hierarchische Baumstruktur abbildet, wobei Zugriffsbsrechtigungen in einem Objektmodell abbildbar sind, das eine hierarchische Baumetruktur aufweist,
- für einen ausgewählten Netzknoten, an dem Dienste anhand rechnerbasierter Objekte bereitgestellt werden, oder bei einer Anforderung eines Zugriffs auf ein rechnerbasiertes Objekt ein relevanter Teilbaum des Objektmodells ermittelt wird,
- die Steuerungsdatei durch den zugriffsrichtliniendienst aus dem ermittelten relevanten Teilbaum erzeugt wird,
- die erzeugt Steuerungsdatei durch den Zugriffsrichtliniendienst für den ausgewählten Netzknoten oder für einen Zugriff auf das rechnerbasierte Objekt verfügbar gemacht wird,
- durch den Zugriffsrichtliniendienst für sämtliche Netzknoten, an denen Dienste bereitgestellt und/oder genutzt werden, jeweils ein relevanter Teilbaum des Objektmodells ermittelt und eine netzknotenspezifische Steuerungsdatei verfügbar gemacht wird,
wenn das Computerprogramm im Rechner abläuft.

## Claims

1. Method for granting an access authorization for a computer-based object in an automation system comprising a plurality of network nodes, in which
- access authorizations are mapped in an object model which has a hierarchic tree structure,
- an access authorization for a computer-based object is granted using a control file which is structured in line with a scheme for a markup language for granting access authorizations and which maps a hierarchic tree structure,
- a relevant subtree from the object model is ascertained for a selected network node, at which services are provided using computer-based objects, or when access to a computer-based object is requested, by an access guideline service,
- the control file is produced from the ascertained relevant subtree by the access guideline service,
- the control file produced is made available for the selected network node or for access to the computer-based object by the access guideline service,
- the access guideline service respectively ascertains a relevant subtree from the object model and makes a network-node-specific control file available for all the network nodes at which services are provided and/or used.

2. Method according to Claim 1,
in which an access authorization for a computer-based object is granted by a control program, which is associated with the computer-based object, using a control file.

3. Method according to Claim 2,
in which the control program is used to provide a service of the automation system within a service-oriented architecture.

4. Method according to one of Claims 1 to 3,
in which the object model is stored in a relational database system and/or is loaded as an object tree into a main memory in a computer unit.

5. Method according to one of Claims 1 to 4,
in which the access guideline service is configured by an engineering system for configuring, servicing, starting up and/or documenting the automation system.

6. Method according to Claim 5,
in which the object model is indexed by the engineering system in order to speed up production of control files.

7. Method according to one of Claims 1 to 6,
in which the scheme for producing the control file is described by an extendable access control markup language, known as XACML.

8. Method according to Claim 7,
in which the control file maps a hierarchic tree structure which has policies comprising rules and policy sets comprising policies as regulatory elements in hierarchically increasing importance, and in which a policy comprises a monitoring element in which a resource-requesting user, a requested resource and a use action are stipulated for checking a usability of the policy, and in which if a policy is usable then a condition element that a rule in the policy comprises is used to check whether a decision indicated in the rule about grant of an access authorization has been stipulated.

9. Method according to Claim 8,
in which production of the control file from the object model stored in the database involves all elements of the object model being assigned respective corresponding condition elements, rules, policies and/or policy sets for the control file.

10. Method according to one of Claims 8 and 9,
in which rules and policy sets also have monitoring elements for checking the usability thereof.

11. Method according to one of Claims 8 to 10,
in which only rules have condition elements.

12. Computer program for granting an access authorization, which computer program can be loaded into a main memory in a computer and has at least one code section whose execution prompts
- an access authorization for a computer-based object to be able to be granted using a control file which is structured in line with a scheme for a markup language for granting access authorizations and which maps a hierarchic tree structure, wherein access authorizations can be mapped in an object model which has a hierarchic tree structure,
- a relevant subtree from the object model to be ascertained for a selected network node, at which services are provided using computer-based objects, or when access to a computer-based object is requested,
- the control file is produced from the ascertained relevant subtree by the access guide,
- the control file produced is made available for the selected network node or for access to the computer-based object by the access guideline service,
- the access guideline service respectively ascertains a relevant subtree from the object model and makes a network-node-specific control file available for all the network nodes at which services are provided and/or used, when the computer program is running in the computer.

## Revendications

1. Procédé de concession d'une autorisation d' accès à un objet informatique, dans un système d'automatisation comprenant plusieurs noeud de réseau, dans lequel
- on forme des autorisations d'accès dans un modèle objet qui comporte une structure arborescente hiérarchique,
- on concède une autorisation d'accès à un objet informatique au moyen d'un fichier de commande, qui est, conformément à un schéma pour un langage distinctif, structuré pour la concession d'une autorisation d'accès et reproduit une structure arborescente hiérarchique,
- pour un noeud de réseau sélectionné où des services sont fournis au moyen des objets informatiques ou lors d'une demande d'un accès à un objet informatique, on détermine un arbre partiel pertinent du modèle objet par un service de directives d'accès,
- on produit le fichier de commande par le service de directives d'accès à partir de l'arbre partiel pertinent qui a été déterminé,
- on rend disponible le fichier de commande produit par le service de directives d'accès pour le noeud de réseau sélectionné ou pour un accès à l'objet informatique,
- par le service de directives d'accès, on détermine pour tous les noeud du réseau où des services sont fournis et/ou utilisés, respectivement un arbre partiel pertinent du modèle objet et on rend disponible un fichier de commande spécifique au noeud de réseau.

2. Procédé suivant la revendication 1,
dans lequel on concède au moyen d'un fichier de commande une autorisation d'accès à un objet informatique par un programme de commande affecté à l'objet informatique.

3. Procédé suivant la revendication 2,
dans lequel au moyen du programme de commande on fournit un service du système d'automatisation dans une architecture de service.

4. Procédé suivant l'une des revendications 1 à 3,
dans lequel on mémorise le modèle objet dans un système de base de données relationnel et/ou on le charge comme arbre objet dans une mémoire de travail d'une unité informatique.

5. Procédé suivant l'une des revendications 1 à 4,
dans lequel on configure le service de directives d'accès par un système d'ingénierie pour la configuration, l'entretien, la mise en fonctionnement et/ou la documentation du système d'automatisation.

6. Procédé suivant la revendication 5,
dans lequel on indexe le modèle objet par le système d'ingénierie pour une production accélérée de fichiers de commande.

7. Procédé suivant l'une des revendications 1 à 6,
dans lequel on décrit le schéma de production du fichier de commande par un langage de balisage de contrôle d'accès extensible, connu sous le nom de XACML.

8. Procédé suivant la revendication 7,
dans lequel le fichier de commande reproduit une structure arborescente hiérarchique qui a comme élément de régulation de signification croissante hiérarchiquement, des policies comprenant des règles et des jeux de policies comprenant des policies et dans lequel une policy comprend un élément de contrôle, dans lequel pour un contrôle d'une possibilité d'application de la policy un utilisateur demandant des ressources, une ressource demandée et une manipulation d'utilisation sont fixés et dans lequel on contrôle dans la possibilité d'application d'une policy au moyen d'un élément de condition compris par une règle de la policy, si une décision, indiquée dans la règle, sur une concession d'une autorisation d'accès, est fixée.

9. Procédé suivant la revendication 8,
dans lequel, lors de la production du fichier de commande à partir du modèle objet mémorisé dans la base de données, on affecte à tous les éléments du modèle objet respectivement des éléments de condition correspondants, des règles, des policies et/ou des jeux de policy pour le fichier de commande.

10. Procédé suivant l'une des revendications 8 ou 9,
dans lequel des règles et des jeux de policy ont aussi des éléments de contrôle pour le contrôle de leur possibilité d'application.

11. Procédé suivant l'une des revendications 8 à 10,
dans lequel seules des règles ont des éléments de condition.

12. Programme informatique pour la concession d'une autorisation d'accès, qui peut être chargé dans une mémoire de travail d'un ordinateur et qui a au moins une section de code, dans l'exécution de laquelle
- une autorisation d'accès à un objet informatique peut être concédée au moyen d'un fichier de commande qui est, pour la concession de l'autorisation d'accès, structuré conformément à un schéma pour une langue de balisage et qui reproduit une structure arborescente hiérarchique, des autorisations d'accès pouvant être reproduites dans un modèle objet qui comporte une structure arborescente hiérarchique,
- pour un noeud de réseau sélectionné où des services sont fournis au moyen des objets informatiques ou lors d'une demande d'un accès à un objet informatique, on détermine un arbre partiel pertinent du modèle objet,
- on produit le fichier de commande par le service de directives d'accès à partir de l'arbre partiel pertinent qui a été déterminé,
- on rend disponible le fichier de commande produit, par le service de directives d'accès pour le noeud de réseau sélectionné ou pour un accès à l'objet informatique,
- par le service de directives d'accès, on détermine pour tous les noeud du réseau où des services sont fournis et/ou utilisés respectivement un arbre partiel pertinent du modèle objet et on rend disponible un fichier de commande spécifique au noeud de réseau,
lorsque le programme informatique passe dans l'ordinateur.
